# EUROPEAN PATENT SPECIFICATION

(11) **EP 4 339 763 B1**
(45) Date of publication and mention of the grant of the patent: **29.04.2026**
(21) Application number: 23163448.6
(22) Date of filing: 22.03.2023
(51) Int. Cl.: G06F 3/12

(54) **INFORMATION PROCESSING APPARATUS AND PROGRAM**
INFORMATIONSVERARBEITUNGSVORRICHTUNG UND -PROGRAMM
APPAREIL ET PROGRAMME DE TRAITEMENT D'INFORMATIONS

(30) Priority: 16.09.2022 JP 2022148541
(43) Date of publication of application: 20.03.2024
(73) Proprietor: FUJIFILM Business Innovation Corp., Minato-ku Tokyo (JP)
(72) Inventor: AOKI, Takashi, Yokohama-shi, Kanagawa (JP)
(74) Representative: Kurig, Thomas

(56) References cited:
- US-A1- 2009 259 880
- US-A1- 2019 278 537

## Description

### BACKGROUND OF THE INVENTION

### (i) Field of the Invention

The present invention relates to an information processing apparatus and a program.

### (ii) Description of Related Art

JP2002-230195A describes a management system that enables an image forming apparatus to autonomously perform automatic recovery without, relying on a recovery process performed by a serviceman.

JP1997-212401A describes a failure recovery method of a distributed database including a plurality of databases having identical contents and a master database, the failure recovery method performing failure recovery of the master database with high reliability.

JP1997-179837A describes a distributed arrangement data recovery system capable of autonomously performing data recovery processing by the system.

JP2012-198617A describes a management apparatus that manages a plurality of image forming apparatus as execution units of a print process, and notifies, according to a failure cause for each image forming apparatus, that has occurred in the execution unit of the print process, an appropriate countermeasure method for the failure.

JP2012-043160A describes a data restoration apparatus capable of reducing a processing time required for data recovery.

JP2008-061168A describes a multifunction terminal device capable of appropriately handling a case where an abnormality corresponding to a service call occurs.
US 2019/278537 A1 discloses an information processing apparatus including: an extraction unit configured to, when an event for changing a configuration of the information processing apparatus occurs, extract a setting that needs to be changed; and a request unit configured to request another information processing apparatus that possesses the setting extracted by the extraction unit, to replicate the setting to the information processing apparatus.

### SUMMARY OF THE INVENTION

The present invention is defined in the appended claims. The following disclosure serves to facilitate understanding of the present invention. An object of the present invention is to provide an information processing apparatus and a program capable of estimating, in a case where an abnormality caused by a setting content occurs, a setting item that causes the abnormality occurrence.

### BRIEF DESCRIPTION OF THE DRAWINGS

Exemplary embodiment(s) of the present invention will be described in detail based on the following figures, wherein:
Fig. 1 is a diagram illustrating a system configuration of an image forming system according to an exemplary embodiment of the present invention;
Fig. 2 is a block diagram illustrating a hardware configuration of an image forming apparatus 10A;
Fig. 3 is a block diagram illustrating a functional configuration of the image forming apparatus 10A;
Fig. 4 is a diagram illustrating an example of a setting information management table of the apparatus in the image forming apparatus 10A;
Fig. 5 is a diagram illustrating an example of a fault code table in the image forming apparatus 10A;
Fig. 6 is a diagram illustrating an example of a list screen of the apparatus displayed on a display unit at a time of a cloning file being imported;
Fig. 7 is a diagram illustrating another example of the list screen of the apparatus displayed on the display unit at the time of the cloning file being imported;
Fig. 8 is a diagram illustrating still another example of the list screen of the apparatus displayed on the display unit at the time of the cloning file being imported;
Fig. 9 is a diagram illustrating still another example of the list screen of the apparatus displayed on the display unit at the time of the cloning file being imported;
Fig. 10 is a diagram illustrating an example of a selection input screen displayed on the display unit at the time of the cloning file being imported;
Fig. 11 is a diagram illustrating still another example of the list screen of the apparatus displayed on the display unit at the time of the cloning file being imported;
Fig. 12 is a diagram illustrating still another example of the list screen of the apparatus displayed on the display unit at the time of the cloning file being imported;
Fig. 13 is a diagram illustrating still another example of the list screen of the apparatus displayed on the display unit at the time of the cloning file being imported;
Fig. 14 is a diagram illustrating another example of the selection input screen displayed on the display unit at the time of the cloning file being imported;
Fig. 15 is a diagram illustrating still another example of the list screen of the apparatus displayed on the display unit at the time of the cloning file being imported;
Fig. 16 is a diagram illustrating still another example of the list screen of the apparatus displayed on the display unit at the time of the cloning file being imported;
Fig. 17 is a flowchart illustrating a flow of a process at the time of the cloning file being imported in the image forming apparatus 10A;
Fig. 18 is a first half of a flowchart illustrating a process flow in a case where setting information of the image forming apparatus 10A and setting information of a peripheral apparatus do not completely correspond to each other at the time of the cloning file being imported in the image forming apparatus 10A; and
Fig. 19 is a second half of the flowchart illustrating the process flow in a case where the setting information of the image forming apparatus 10A and the setting information of the peripheral apparatus do not completely correspond to each other at the time of the cloning file being imported in the image forming apparatus 10A.

### DETAILED DESCRIPTION OF THE INVENTION

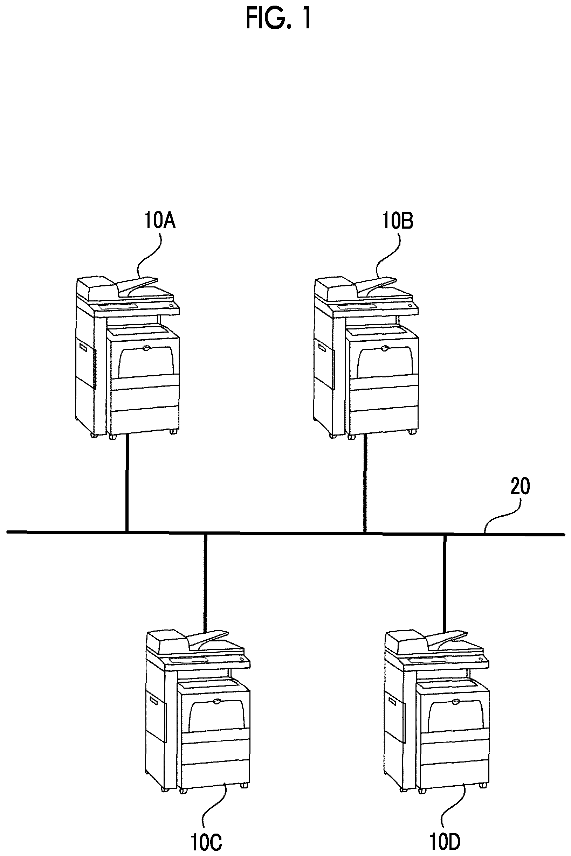

Hereinafter, exemplary embodiments of the present invention will be described in detail with reference to the accompanying drawings. Fig. 1 is a diagram illustrating a system configuration of an image forming system according to an exemplary embodiment of the present invention.

As illustrated in Fig. 1, the image forming system of the present exemplary embodiment is configured with an image forming apparatus 10A, an image forming apparatus 10B, an image forming apparatus 10C, and an image forming apparatus 10D connected to each other by a network 20.

The image forming apparatus 10A, the image forming apparatus 10B, and the image forming apparatus 10C are all so-called multifunction machines having a plurality of functions such as a print function, a scanning function, a copying function, and a facsimile function. The image forming apparatus 10D is a so-called printer machine having only a print function. The image forming apparatus 10A is an example of an information processing apparatus according to a technology of the present invention.

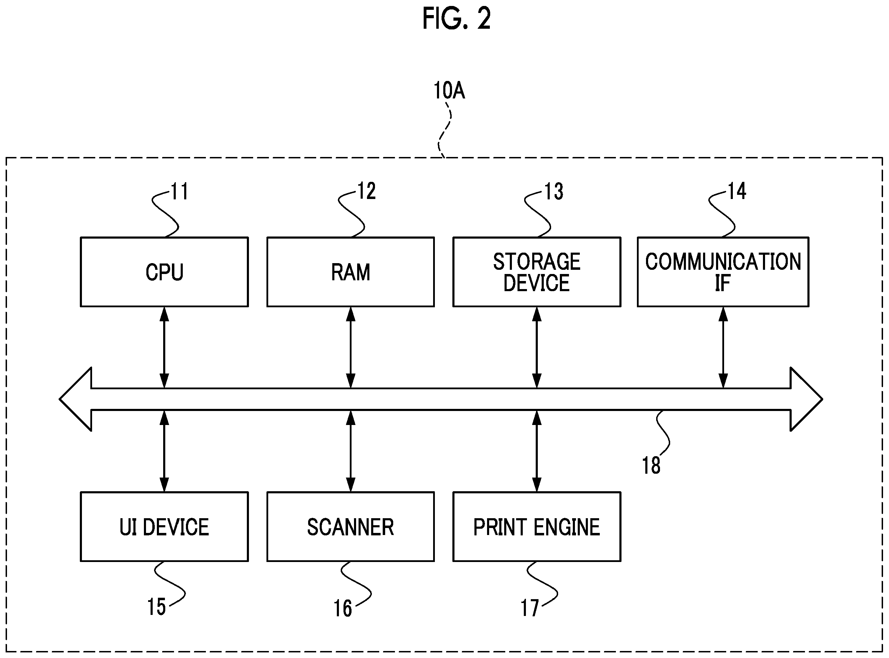

Next, a hardware configuration of the image forming apparatus 10A of the present exemplary embodiment will be described. Fig. 2 is a block diagram illustrating a hardware configuration of the image forming apparatus 10A.

As illustrated in Fig. 2, the image forming apparatus 10A includes a central processing unit (CPU) 11, a random access memory (RAM) 12, a storage device 13 such as a hard disk drive, a communication interface (abbreviated as IF) 14, a user interface (abbreviated as UI) device 15 including a touch panel or a liquid crystal display, and a keyboard, a scanner 16, and a print engine 17. These components are connected to each other via a control bus 18.

The communication IF 14 transmits and receives data to and from an external apparatus or the like via the network 20. The UI device 15 accepts an instruction input from a user. The scanner 16 scans a document loaded in the image forming apparatus 10A as image data. The print engine 17 prints an image on a recording medium such as printing paper through steps such as charging, exposure, development, transfer, and fixing.

The CPU 11 is a processor that controls an operation of the image forming apparatus 10A by executing a predetermined process based on a control program stored in the RAM 12 or the storage device 13. In the present exemplary embodiment, the CPU 11 is described as the processor reading and executing the control program stored in the RAM 12 or the storage device 13, and the present invention is not limited thereto. The control program may be provided in a form recorded on a computer-readable recording medium. For example, this program may be provided as a form recorded on an optical disk such as a compact disc (CD)-read only memory (ROM) and a digital versatile disc (DVD)-ROM, or a semiconductor memory such as a universal serial bus (USB) memory and a memory card. Further, the control program may be acquired from an external apparatus via a communication line connected to the communication interface 14.

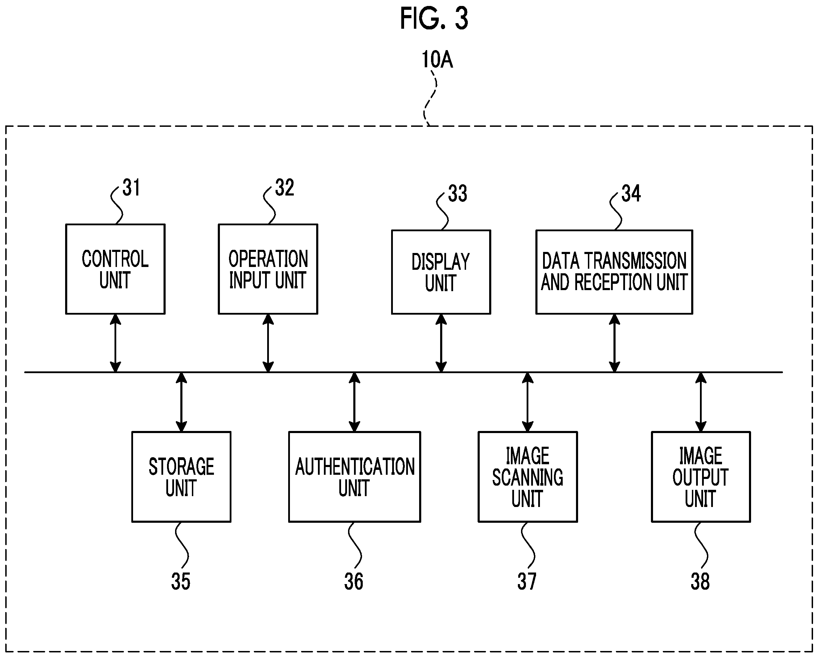

Next, a functional configuration of the image forming apparatus 10A of the present exemplary embodiment will be described. Fig. 3 is a block diagram illustrating the functional configuration of the image forming apparatus 10A.

As illustrated in Fig. 3, the image forming apparatus 10A of the present exemplary embodiment includes a control unit 31, an operation input unit 32, a display unit 33, a data transmission and reception unit 34, a storage unit 35, an authentication unit 36, an image scanning unit 37, and an image output unit 38.

The control unit 31 controls an overall operation of the image forming apparatus 10A, and performs control of scanning a document image by the image scanning unit 37 based on an instruction input from the user, control of outputting print data from the image output unit 38, and the like.

The operation input unit 32 inputs information on various operations performed by the user. The display unit 33 is controlled by the control unit 31, and displays various types of information to the user. The data transmission and reception unit 34 transmits and receives data to and from an external apparatus such as the image forming apparatus 10B.

The storage unit 35 stores data of a setting information management table and a fault code table, in addition to the control program. The setting information management table and the fault code table will be described in detail below. The authentication unit 36 executes an authentication process for the user who intends to use the image forming apparatus 10A.

The image scanning unit 37 scans a document image from a loaded document, based on the control by the control unit 31. The image output unit 38 outputs an image on a recording medium such as printing paper based on the control by the control unit 31.

In the image forming apparatus 10A of the present exemplary embodiment, in a case where an abnormality caused by a setting content of the image forming apparatus 10A occurs, the setting item causing the abnormality occurrence can be estimated, so that in a case where the abnormality occurs in the image forming apparatus 10A, the control unit 31 acquires setting information from an external apparatus, and extracts a setting item of which setting contents are different between the setting information of the image forming apparatus 10A and the acquired setting information.

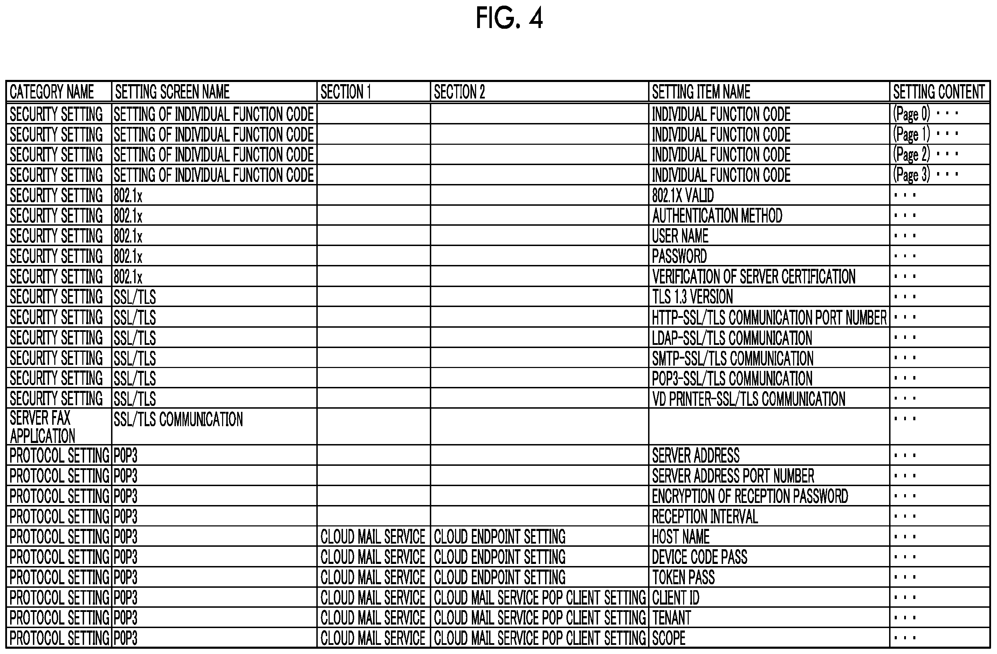

Hereinafter, a process in the image forming apparatus 10A of the present exemplary embodiment will be described in detail. First, setting information of the apparatus in the image forming apparatus 10A will be described. Fig. 4 is a diagram illustrating an example of a setting information management table of the apparatus in the image forming apparatus 10A. The setting information management table illustrated in Fig. 4 describes some of a plurality of setting items in the image forming apparatus 10A as an example.

As illustrated in Fig. 4, the setting information management table has items of "category name", "setting screen name", "section 1", "section 2", "setting item name", and "setting content".

The "category name" is a name of a category to which the setting item belongs. The "setting screen name" is a name of a screen for editing a setting of the setting item. For example, at a setting screen of a "setting of individual function code", there is a setting item of an "individual function code", and the setting item corresponding to each of (Page 0) to (Page 3) can be edited.

The "section 1" and "section 2" are names of subcategories that are classifications within the identical setting screen. For example, a setting screen of "POP (Post Office Protocol) 3" is divided into two subcategories, "none" and "cloud mail service". Further, an item of the "cloud mail service" is divided into two subcategories of "cloud endpoint setting" and "cloud mail service POP client setting".

The "setting item name" is a name of the setting item. The "setting content" is a setting content in the setting item.

The setting information management table has a plurality of setting items such as "individual identification code", "802.1x valid", "authentication method", "user name", "password", and a setting content is recorded for each setting item.

These setting items are classified into three categories of "security setting", "server fax application", and "protocol setting". Further, within the same category, the setting item is further classified into subcategories such as "setting screen name", "section 1", and "section 2".

The category of "security setting" includes three subcategories of "individual function code", "802.1x", and "secure sockets layer (SSL)/transport layer security (TLS)" classified for each setting screen.

In the category of "server fax application", there is only one setting screen, and there is no classification for each section.

In the category of "protocol setting", although the setting screen is one with the "POP3", the item of "section 1" has the two subcategories of the "none" and the "cloud mail service". Further, in the item of the "cloud mail service", there are two subcategories of the "cloud endpoint setting" and the "cloud mail service POP client setting".

The setting information management table as described above is also managed in the image forming apparatus 10B, the image forming apparatus 10C, and the image forming apparatus 10D.

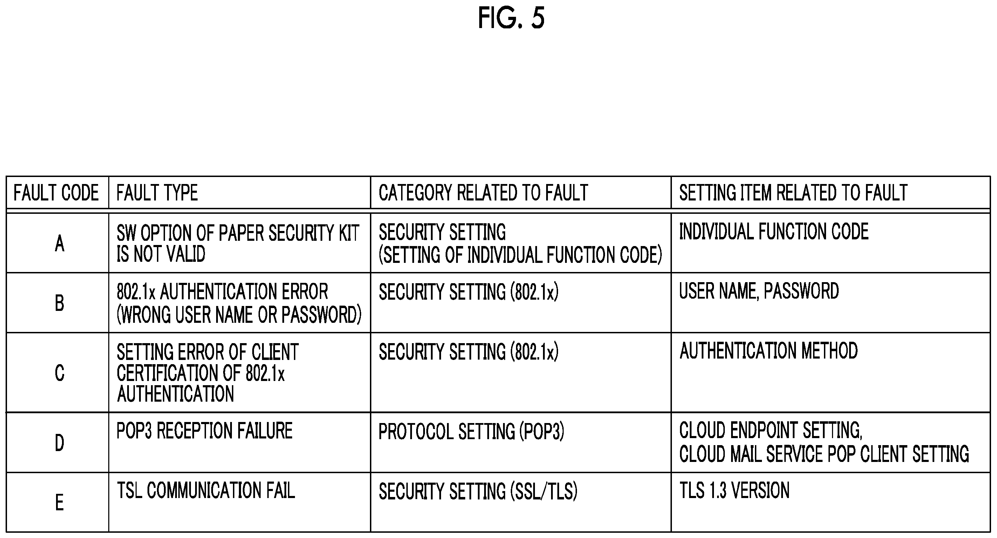

Next, a fault code in the image forming apparatus 10A will be described. The fault code is an identifier assigned to each type of abnormality that has occurred in the apparatus. In the following description, "abnormality" is referred to as "fault", in some cases. Fig. 5 is a diagram illustrating an example of a fault code table in which information such as a fault code and a fault type are recorded in association with each other.

As illustrated in Fig. 5, in the fault code table, information of "fault type", "category related to fault", and "setting related to fault" is recorded for each "fault code".

For example, a fault code A is a fault that "software (SW) option of paper security kit is not valid". A category related to this fault is "security setting (setting of individual function code)", and a setting item related to this fault is "individual function code".

Further, a fault code B is a fault of "802.1x authentication error (wrong user name or password)". A category related to this fault is "security setting (802.1x)", and the setting items related to this fault are "user name" and "password".

Hereinafter, the same applies to fault codes C to E.

The data of the setting information management table and the fault code table are stored in the storage unit 35.

In a case of detecting that a fault occurs in the image forming apparatus 10A, the control unit 31 acquires setting information from at least one apparatus of the image forming apparatus 10B, the image forming apparatus 10C, or the image forming apparatus 10D connected to the image forming apparatus 10A, and extracts a setting item of which setting contents are different between setting information of the image forming apparatus 10A and the acquired setting information.

Accordingly, the control unit 31 can identify the setting items of which the setting contents are different between the setting information of the image forming apparatus 10A and the setting information of the other apparatus, so that the setting item causing the fault occurrence can be estimated.

The control unit 31 notifies the user of the extracted setting item.

In addition, the control unit 31 changes the setting content of the extracted setting item into the setting content of the acquired setting information.

Further, in a case where a fault occurs in the image forming apparatus 10A, the control unit 31 acquires setting information associated with the fault from an external apparatus, and extracts an item having of which setting contents are different between setting information of the image forming apparatus 10A associated with the fault and the acquired setting information associated with the fault.

In a case where the setting information is classified into a plurality of categories in the same manner as the setting information management table of the present exemplary embodiment, the control unit 31 acquires only the setting information of the category associated with the fault that has occurred.

For example, in a case where a fault of the fault code A occurs, only the setting information of "security setting (setting of individual function code)" which is a category related to this fault may be acquired.

Further, in a case where there is no difference between the setting information of the image forming apparatus 10A and the acquired setting information, the control unit 31 notifies a person in charge of maintenance of the case. The notification to the person in charge of maintenance may be made by any method, for example, by sending an e-mail indicating that a fault occurs in the image forming apparatus 10A to a preset e-mail address.

Further, the external apparatus from which the setting information is acquired may be an apparatus connected to the image forming apparatus 10A via the network 20. In this case, the external apparatus from which the setting information is acquired may be an apparatus registered in advance.

In addition, in a case where the acquired setting information does not correspond to a version of control software of the image forming apparatus 10A, the control unit 31 corrects and changes the acquired setting information.

For example, in a case where the version of the control software of the image forming apparatus 10A is older than a version of control software of the apparatus from which the setting information is acquired, the acquired setting information may be corrected to correspond to the old version of the control software, and the setting information of the image forming apparatus 10A may be changed so as to be a setting content of the corrected setting information.

Further, in a case where the acquired setting information does not correspond to the version of the control software of the image forming apparatus 10A, the control unit 31 updates the version of the control software of the image forming apparatus 10A to the version corresponding to the acquired setting information.

For example, in a case where the version of the control software of the image forming apparatus 10A is older than the version of the control software of the apparatus from which the setting information is acquired, the version of the control software of the image forming apparatus 10A may be updated to the same version as the version of the control software of the apparatus from which the setting information is acquired.

Further, in a case where the number of setting items of the acquired setting information is smaller than the number of setting items of the setting information of the image forming apparatus 10A, the control unit 31 notifies that the number of setting items of the acquired setting information is smaller than the number of setting items of the setting information of the image forming apparatus 10A.

In addition, in a case where the number of setting items of the acquired setting information is smaller than the number of setting items of the setting information of the image forming apparatus 10A, the control unit 31 acquires setting information of a shortage setting item from another external apparatus different from the external apparatus from which the setting information is acquired.

Further, in a case where the number of setting items of the acquired setting information is larger than the number of setting items of the setting information of the image forming apparatus 10A, the control unit 31 notifies that the number of setting items of the acquired setting information is larger than the number of setting items of the setting information of the image forming apparatus 10A.

Further, in a case where the number of setting items of the acquired setting information is larger than the number of setting items of the setting information of the image forming apparatus 10A, the control unit 31 may not use the setting information of the excessive setting item.

Next, a specific example of the process in the image forming apparatus 10A of the present exemplary embodiment will be described.

### <Specific Example 1>

The image forming apparatus 10A, the image forming apparatus 10B, the image forming apparatus 10C, and the image forming apparatus 10D are installed in the same office. These apparatuses are connected to each other via the network 20. Further, as an external apparatus from which setting information is acquired in a case where a fault occurs in the image forming apparatus 10A, the image forming apparatus 10B, the image forming apparatus 10C, and the image forming apparatus 10D connected to the image forming apparatus 10A via the network 20 are pre-registered by the user.

The image forming apparatus 10B is registered with a name of "multifunction machine B (administration department)". The image forming apparatus 10C is registered with a name of "multifunction machine C (development department)". The image forming apparatus 10D is registered under a name of "printer machine D (manufacturing department)".

Under such statuses, hybrid watermark detection hardware is commonly installed on the four image forming apparatuses in the office. In order to use the hybrid watermark detection hardware, it is necessary to set a software option of a paper security kit in a setting item of an individual function code of setting information to be valid.

In the image forming apparatus 10B, the image forming apparatus 10C, and the image forming apparatus 10D, the software option of the paper security kit is set to be valid in the setting item of the individual function code of the setting information.

Meanwhile, in the image forming apparatus 10A, the software option of the paper security kit is set to be invalidated in the setting item of the individual function code of the setting information. In this case, in the image forming apparatus 10A, a fault of the fault code A in the fault code table in Fig. 5 (SW option of paper security kit is not valid) occurs.

In a case of detecting the fault of the fault code A, the control unit 31 refers to the fault code table, and specifies "security setting (setting of individual function code)" as a category related to the fault. In a category related to the fault, information of a setting screen name is also recorded as a subcategory related to the fault in ().

Next, the control unit 31 acquires setting information of the category related to the fault from the image forming apparatus 10B, the image forming apparatus 10C, and the image forming apparatus 10D which are pre-registered, and compares the setting information with setting information of the image forming apparatus 10A.

In a case where there is a difference between the setting information of the corresponding category of the image forming apparatus 10A and the setting information of the corresponding category acquired from each apparatus, the control unit 31 determines the setting information of the corresponding category as a cloning file. The cloning file is a file of setting information acquired from an external apparatus and duplicated in setting information of the image forming apparatus 10A.

Next, the control unit 31 displays, as a list of import sources of the setting information, a list screen of an apparatus having a difference from the setting information of the corresponding category of the image forming apparatus 10A on the display unit 33.

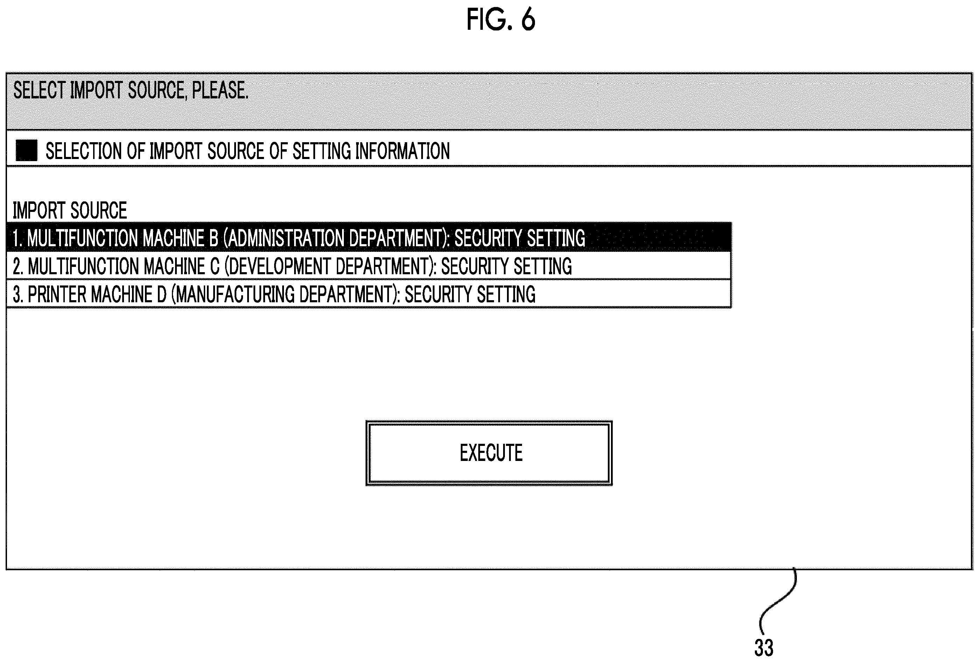

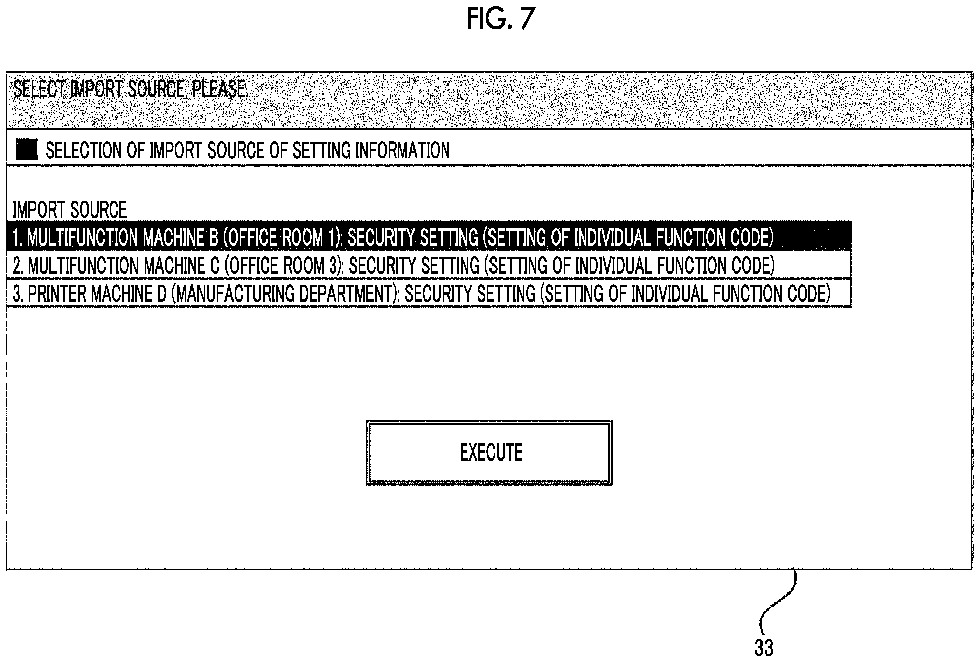

At this time, the control unit 31 may display only a category name related to the fault for each apparatus as illustrated in Fig. 6, or may display the category name and a subcategory name related to the fault for each apparatus and as illustrated in Fig. 7.

In order to resolve the fault of the fault code A, the control unit 31 notifies the user that a cloning file needs to be imported. In a case where the user selects and inputs an apparatus from which the cloning file is to be acquired on a list screen, the control unit 31 imports the cloning file acquired from the selected apparatus into the image forming apparatus 10A.

### <Specific Example 2>

The point in which the image forming apparatus 10A, the image forming apparatus 10B, the image forming apparatus 10C, and the image forming apparatus 10D are installed in the same office, and the registration name of each apparatus is the same as the above-described specific example 1.

In this example, an external apparatus from which setting information is to be acquired in a case where a fault occurs in the image forming apparatus 10A is not pre-registered.

Under such a status, it is assumed that a fault of a fault code B (802.1x authentication error (difference in user name or password)) in the fault code table in Fig. 5 occurs in the image forming apparatus 10A.

In a case of detecting the fault of the fault code B, the control unit 31 refers to the fault code table, and specifies "security setting (802.1x)", as a category related to the fault.

Next, the control unit 31 searches for peripheral office machines, and extracts the image forming apparatus 10B, the image forming apparatus 10C, and the image forming apparatus 10D connected to the same network 20 as the image forming apparatus 10A.

Next, the control unit 31 acquires setting information of the category related to the fault from the image forming apparatus 10B, the image forming apparatus 10C, and the image forming apparatus 10D which are extracted, and compares the setting information with setting information of the image forming apparatus 10A.

In a case where there is a difference between the setting information of the corresponding category of the image forming apparatus 10A and the setting information of the corresponding category acquired from each apparatus, the control unit 31 determines the setting information of the corresponding category as a cloning file.

Next, the control unit 31 displays, as a list of import sources of the setting information, a list screen of an apparatus having a difference from the setting information of the corresponding category of the image forming apparatus 10A on the display unit 33.

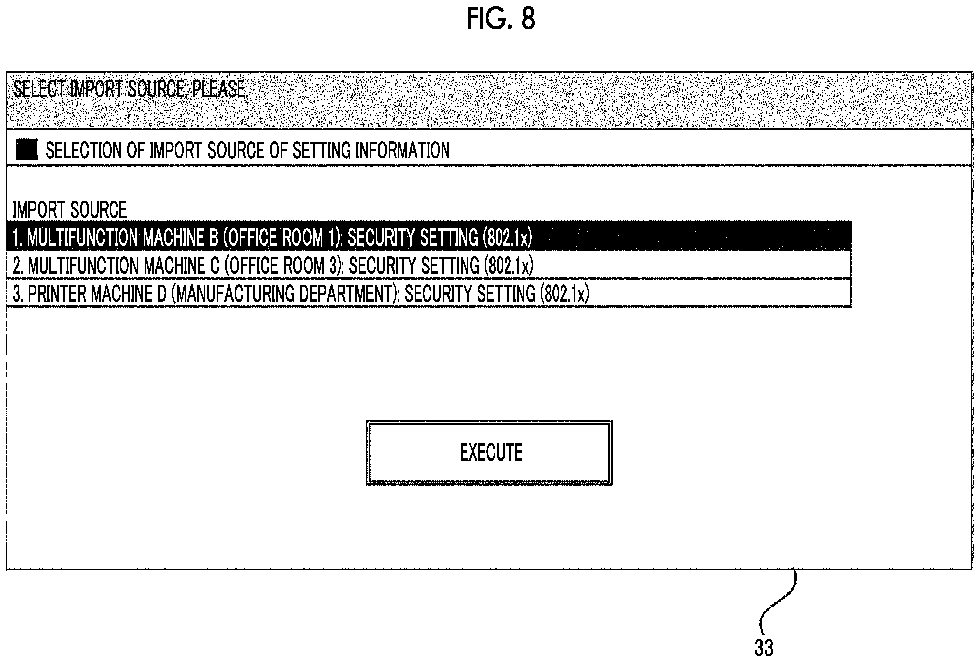

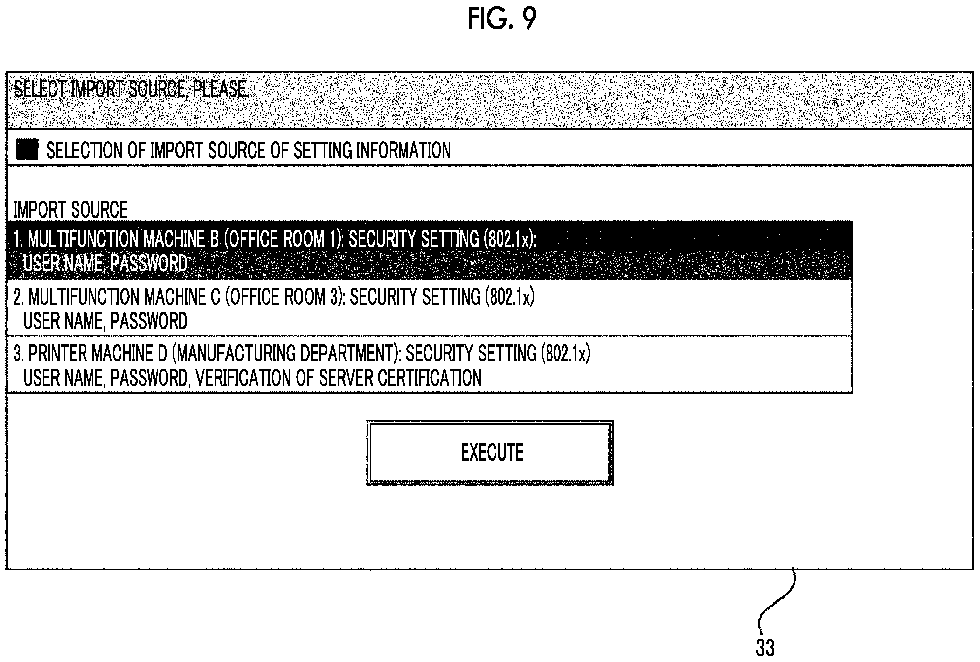

At this time, the control unit 31 may display only a category name related to the fault for each apparatus as illustrated in Fig. 6, or may display the category name and a subcategory name related to the fault for each apparatus and as illustrated in Fig. 8. Further, as illustrated in Fig. 9, in addition to the category name and the subcategory name related to the fault, a setting item name having a difference from the image forming apparatus 10A may be displayed, for each apparatus.

In order to resolve the fault of the fault code B, the control unit 31 notifies the user that a cloning file needs to be imported. In a case where the user selects and inputs an apparatus from which the cloning file is to be acquired on a list screen, the control unit 31 imports the cloning file acquired from the selected apparatus into the image forming apparatus 10A.

In the description of the above-described specific example 2, the example in which the fault of the fault code B occurs is described as an example, and in a case where a fault of a fault code C (a setting error of a client certificate for 802.1x authentication) occurs, the process in the same manner is also performed.

### <Specific Example 3>

In this example, a case where the number of setting items of an external apparatus is larger than the number of setting items of the image forming apparatus 10A by comparing the image forming apparatus 10A with the external apparatus will be described. An installation environment of the apparatus in this example has the same manner as the above-described specific example 1.

In this example, it is assumed that the image forming apparatus 10A, which is the own apparatus, does not have setting items related to the "cloud endpoint setting" and the "cloud mail service POP client setting".

Under such a status, it is assumed that POP communication with a specific communication destination fails in the image forming apparatus 10A, and a fault of a fault code D in the fault code table (POP3 reception failure) in Fig. 5 occurs.

In a case of detecting the fault of the fault code D, the control unit 31 refers to the fault code table, and specifies "protocol setting (POP3)", as a category related to the fault.

Next, the control unit 31 acquires setting information of the category related to the fault from the image forming apparatus 10B, the image forming apparatus 10C, and the image forming apparatus 10D which are pre-registered, and compares the setting information with setting information of the image forming apparatus 10A.

In a case where there is a difference between the setting information of the corresponding category of the image forming apparatus 10A and the setting information of the corresponding category acquired from each apparatus, the control unit 31 determines the setting information of the corresponding category as a cloning file.

At this time, the control unit 31 detects that, in the image forming apparatus 10A, which is the own apparatus, a version of control software is older than a version of control software of an external apparatus, and setting items existing in the external apparatus may not exist in the image forming apparatus 10A, in some cases.

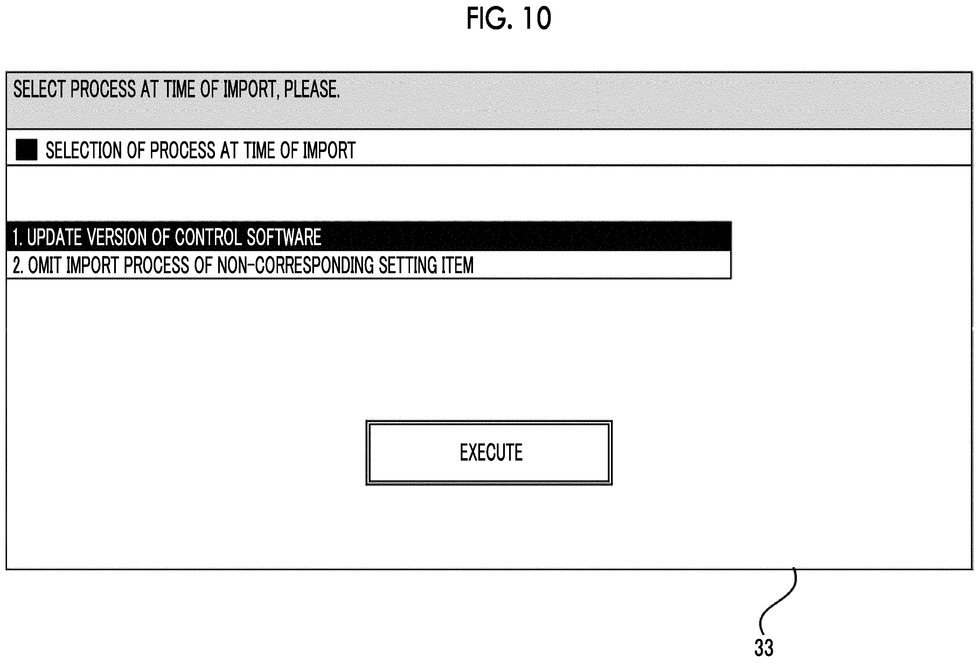

In this case, the control unit 31 displays a selection input screen on the display unit 33 as illustrated in Fig. 10, and allows the user to select and input whether to update the version of the control software to the same version as the version of the control software of the external apparatus or to omit an import of the setting items which do not correspond between the image forming apparatus 10A and the external apparatus.

In a case where an option to update the version of the control software to the same version as the external apparatus is selected and input, the control unit 31 updates the version of the control software of the image forming apparatus 10A to the same version as the external apparatus.

Next, the control unit 31 displays, as a list of import sources of the setting information, a list screen of an apparatus having a difference from the setting information of the corresponding category of the image forming apparatus 10A on the display unit 33.

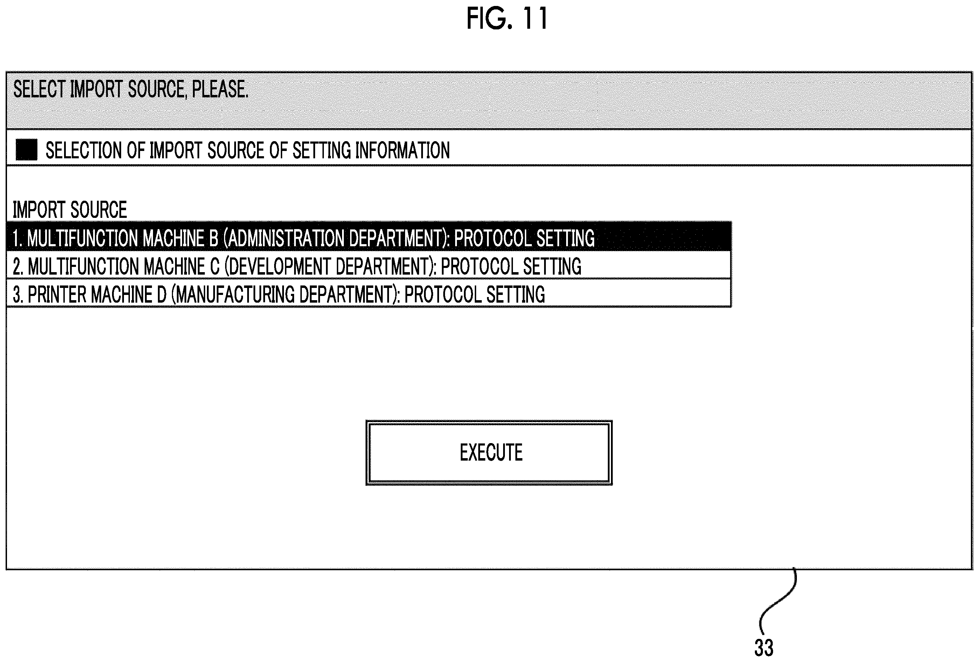

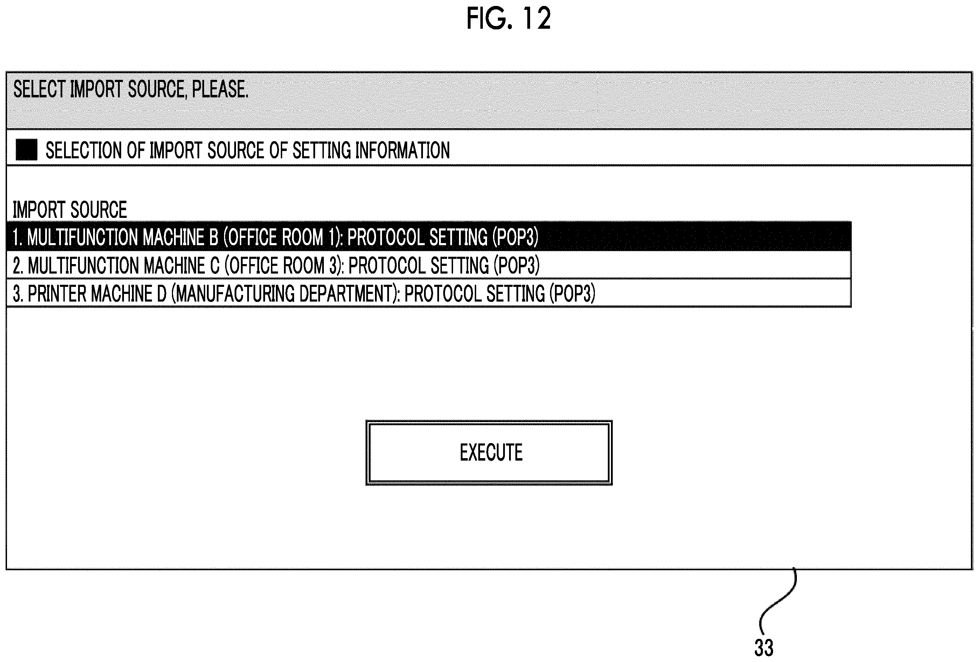

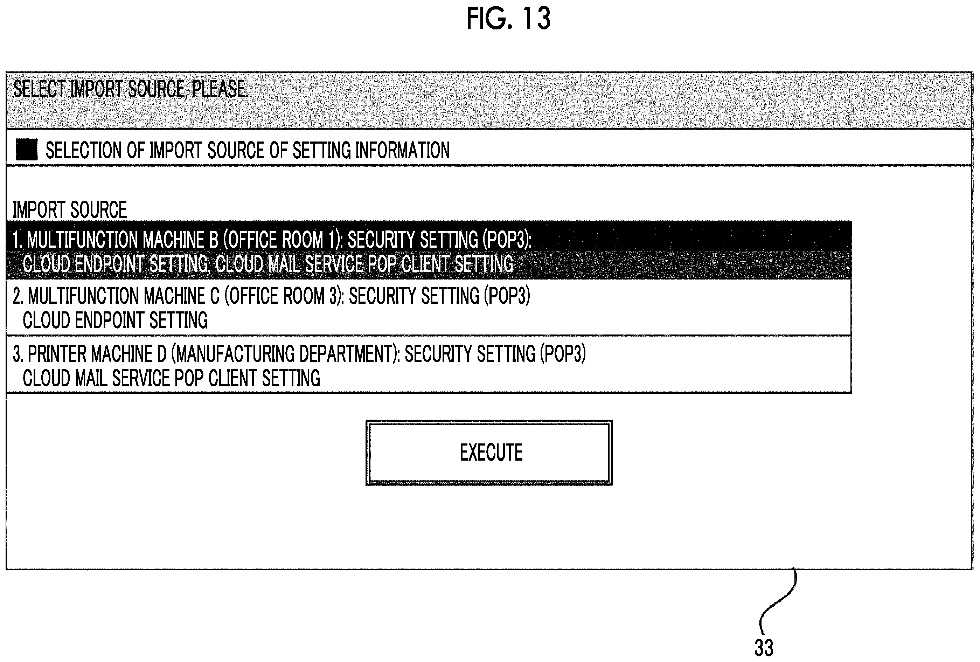

At this time, the control unit 31 may display only a category name related to the fault for each apparatus as illustrated in Fig. 11, or may display the category name and a subcategory name related to the fault for each apparatus and as illustrated in Fig. 12. Further, as illustrated in Fig. 13, in addition to the category name and the subcategory name related to the fault, a setting item name having a difference from the image forming apparatus 10A may be displayed, for each apparatus.

In order to resolve the fault of the fault code D, the control unit 31 notifies the user that a cloning file needs to be imported. In a case where the user selects and inputs an apparatus from which the cloning file is to be acquired on a list screen, the control unit 31 imports the cloning file acquired from the selected apparatus into the image forming apparatus 10A.

### <Specific Example 4>

In this example, a case where the number of setting items of an external apparatus is smaller than the number of setting items of the image forming apparatus 10A by comparing the image forming apparatus 10A with the external apparatus will be described. An installation environment of the apparatus in this example has the same manner as the above-described specific example 1.

In this example, it is assumed that the image forming apparatus 10B, the image forming apparatus 10C, and the image forming apparatus 10D do not have setting items related to the "cloud endpoint setting" and the "cloud mail service POP client setting".

Under such a status, it is assumed that POP communication with a specific communication destination fails in the image forming apparatus 10A, and a fault of a fault code D in the fault code table (POP3 reception failure) in Fig. 5 occurs.

In a case of detecting the fault of the fault code D, the control unit 31 refers to the fault code table, and specifies "protocol setting (POP3)", as a category related to the fault.

Next, the control unit 31 acquires setting information of the category related to the fault from the image forming apparatus 10B, the image forming apparatus 10C, and the image forming apparatus 10D which are pre-registered, and compares the setting information with setting information of the image forming apparatus 10A.

In a case where there is a difference between the setting information of the corresponding category of the image forming apparatus 10A and the setting information of the corresponding category acquired from each apparatus, the control unit 31 determines the setting information of the corresponding category as a cloning file.

At this time, the control unit 31 detects that, in the image forming apparatus 10A, which is the own apparatus, a version of control software is newer than a version of control software of an external apparatus, and setting items existing in the image forming apparatus 10A may not exist in the external apparatus, in some cases.

In this case, the control unit 31 notifies the user that the setting items related to the "cloud endpoint setting" and the "cloud mail service POP client setting" are not updated, and acquires an input of consent.

Further, the control unit 31 displays a selection input screen on the display unit 33 as illustrated in Fig. 10, and allows the user to select and input whether to update the version of the control software to the same version as the version of the control software of the external apparatus or to omit an import of the setting items which do not correspond between the image forming apparatus 10A and the external apparatus.

In a case where an option to update the version of the control software to the same version as the external apparatus is selected and input, the control unit 31 updates the version of the control software of the image forming apparatus 10A to the same version as the external apparatus.

Next, the control unit 31 displays, as a list of import sources of the setting information, a list screen of an apparatus having a difference from the setting information of the corresponding category of the image forming apparatus 10A on the display unit 33.

At this time, the control unit 31 may display only a category name related to the fault for each apparatus as illustrated in Fig. 11, or may display the category name and a subcategory name related to the fault for each apparatus and as illustrated in Fig. 12. Further, as illustrated in Fig. 13, in addition to the category name and the subcategory name related to the fault, a setting item name having a difference from the image forming apparatus 10A may be displayed, for each apparatus.

In order to resolve the fault of the fault code D, the control unit 31 notifies the user that a cloning file needs to be imported. In a case where the user selects and inputs an apparatus from which the cloning file is to be acquired on a list screen, the control unit 31 imports the cloning file acquired from the selected apparatus into the image forming apparatus 10A.

### <Specific Example 5>

In this example, a case where a setting item as it is of an external apparatus cannot be imported with respect to a setting item of the image forming apparatus 10A will be described. An installation environment of the apparatus in this example has the same manner as the above-described specific example 1.

In this example, it is assumed that a version of TLS in the image forming apparatus 10A which is the own apparatus is 1.2, and a version of TLS in the image forming apparatus 10B, the image forming apparatus 10C, and the image forming apparatus 10D is 1.3.

Under such a status, it is assumed that TLS communication with a specific communication destination fails in the image forming apparatus 10A, and a fault of a fault code E in the fault code table in Fig. 5 (TLS communication failure) occurs.

In a case of detecting the fault of the fault code E, the control unit 31 refers to the fault code table, and specifies "security setting (SSL/TLS)", as a category related to the fault.

Next, the control unit 31 acquires setting information of the category related to the fault from the image forming apparatus 10B, the image forming apparatus 10C, and the image forming apparatus 10D which are pre-registered, and compares the setting information with setting information of the image forming apparatus 10A.

In a case where there is a difference between the setting information of the corresponding category of the image forming apparatus 10A and the setting information of the corresponding category acquired from each apparatus, the control unit 31 determines the setting information of the corresponding category as a cloning file.

At this time, the control unit 31 detects that the image forming apparatus 10A, which is the own apparatus, has an older version of control software than a version of control software of the external apparatus and the setting item as it is of the external apparatus cannot be imported.

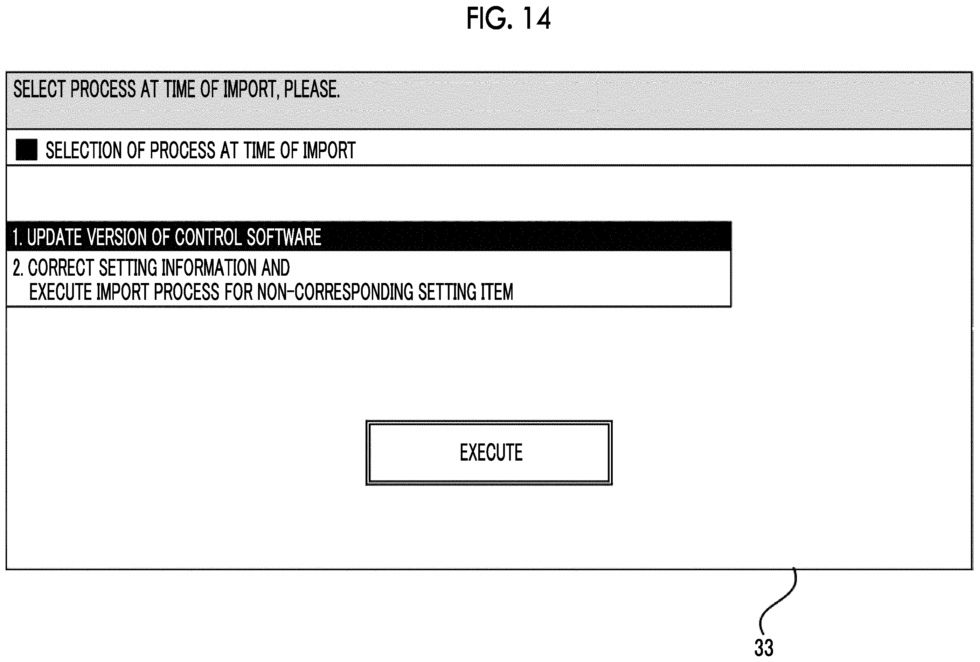

In this case, the control unit 31 displays a selection input screen on the display unit 33 as illustrated in Fig. 14, and allows the user to select and input whether to update the version of the control software to the same version as the version of the control software of the external apparatus or to correct and import setting information for the setting item which does not correspond between the image forming apparatus 10A and the external apparatus.

In a case where an option to update the version of the control software to the same version as the external apparatus is selected and input, the control unit 31 updates the version of the control software of the image forming apparatus 10A to the same version as the external apparatus.

Next, the control unit 31 displays, as a list of import sources of the setting information, a list screen of an apparatus having a difference from the setting information of the corresponding category of the image forming apparatus 10A on the display unit 33.

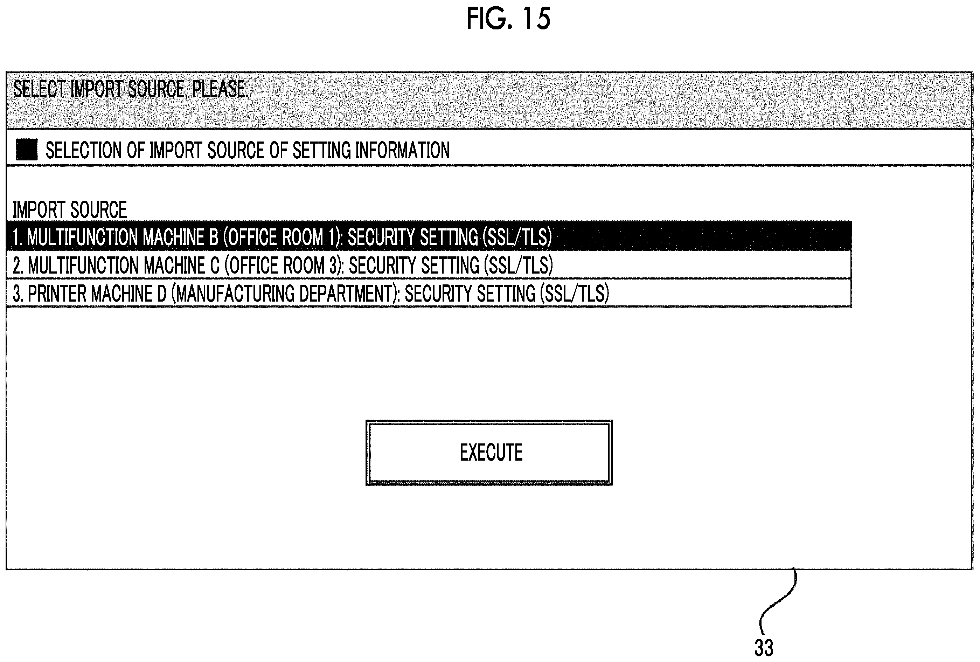

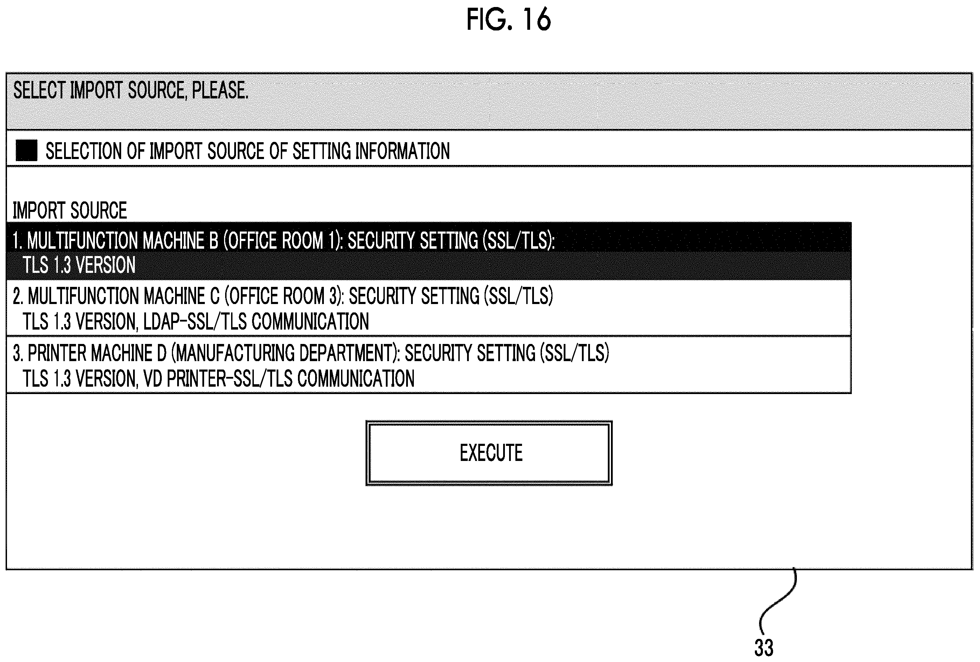

At this time, the control unit 31 may display only a category name related to the fault for each apparatus as illustrated in Fig. 6, or may display the category name and a subcategory name related to the fault for each apparatus and as illustrated in Fig. 15. Further, as illustrated in Fig. 16, in addition to the category name and the subcategory name related to the fault, a setting item name having a difference from the image forming apparatus 10A may be displayed, for each apparatus.

In order to resolve the fault of the fault code E, the control unit 31 notifies the user that a cloning file needs to be imported. In a case where the user selects and inputs an apparatus from which the cloning file is to be acquired on a list screen, the control unit 31 imports the cloning file acquired from the selected apparatus into the image forming apparatus 10A.

At this time, in a case where it is selected and input that the setting information is corrected for the setting item which does not correspond between the image forming apparatus 10A and the external apparatus and the import process is executed, the control unit 31 corrects the setting content of the TLS 1.3 version in the setting information acquired from the outside to the setting content corresponding to the TLS 1.2 version and imports the setting content.

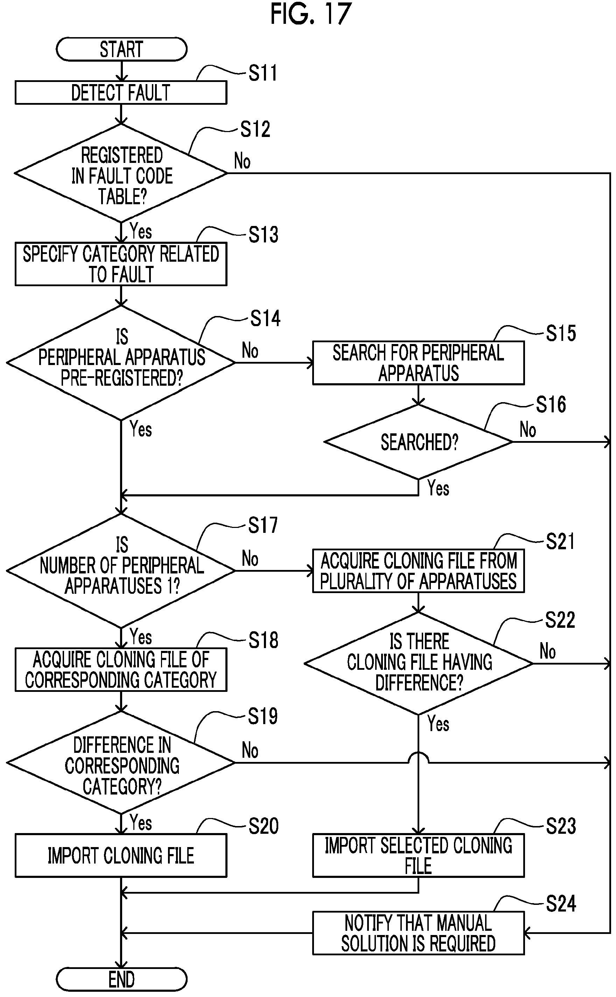

Next, a process at a time of importing a cloning file in the image forming apparatus 10A will be described with reference to a flowchart in Fig. 17.

In step S11, the control unit 31 of the image forming apparatus 10A detects a fault in the image forming apparatus 10A, and in step S12, determines whether or not the detected fault is registered in a fault code table.

In step S12, in a case where it is determined that the detected fault is not registered in the fault code table, the control unit 31 notifies a user that a manual solution is required in step S24, and ends the process.

In a case where it is determined in step S12 that the detected fault is registered in the fault code table, the control unit 31 specifies a category related to the fault with reference to the fault code table in step S13.

Next, in step S14, the control unit 31 determines whether or not a peripheral apparatus from which setting information is acquired in a case where a fault occurs in the image forming apparatus 10A is pre-registered.

In step S14, in a case where it is determined that the peripheral apparatus is pre-registered, the control unit 31 transitions to step S17.

In a case where it is determined in step S14 that the peripheral apparatus is not pre-registered, the control unit 31 searches for the peripheral apparatus connected to the same network 20 in step S15.

Next, in step S16, the control unit 31 determines whether or not the peripheral apparatus is searched.

In step S16, in a case where it is determined that the peripheral apparatus is not searched, the control unit 31 notifies the user that a manual solution is required in step S24, and ends the process.

In step S16, in a case where it is determined that the peripheral apparatus is searched, the control unit 31 transitions to step S17.

Next, in step S17, the control unit 31 determines whether or not the number of peripheral apparatuses is 1.

In step S17, in a case where it is determined that the number of peripheral apparatuses is 1, the control unit 31 acquires a cloning file of the category specified in step S13 from the corresponding apparatus, in step S18.

Next, in step S19, the control unit 31 determines whether or not there is a difference in setting information of the corresponding category between the image forming apparatus 10A and the peripheral apparatus.

In step S19, in a case where it is determined that there is a difference in the setting information, the control unit 31 imports the cloning file in step S20, and ends the process.

In step S19, in a case where it is determined that there is no difference in the setting information, the control unit 31 notifies the user that a manual solution is required in step S24, and ends the process.

Further, in a case where it is determined in step S17 that the number of peripheral apparatuses is not 1, the control unit 31 acquires the cloning file of the category specified in step S13 from a plurality of apparatuses in step S21.

Next, in step S22, the control unit 31 determines whether or not there is at least one cloning file having a difference in the setting information of the corresponding category between the image forming apparatus 10A and the peripheral apparatus.

In step S22, in a case where it is determined that there is at least one cloning file having a difference in the setting information, the control unit 31 imports a cloning file selected by the user, among the cloning files having the difference in the setting information in step S23, and ends the process.

In step S22, in a case where it is determined that there is no cloning file having a difference in the setting information, the control unit 31 notifies the user that a manual solution is required in step S24, and ends the process.

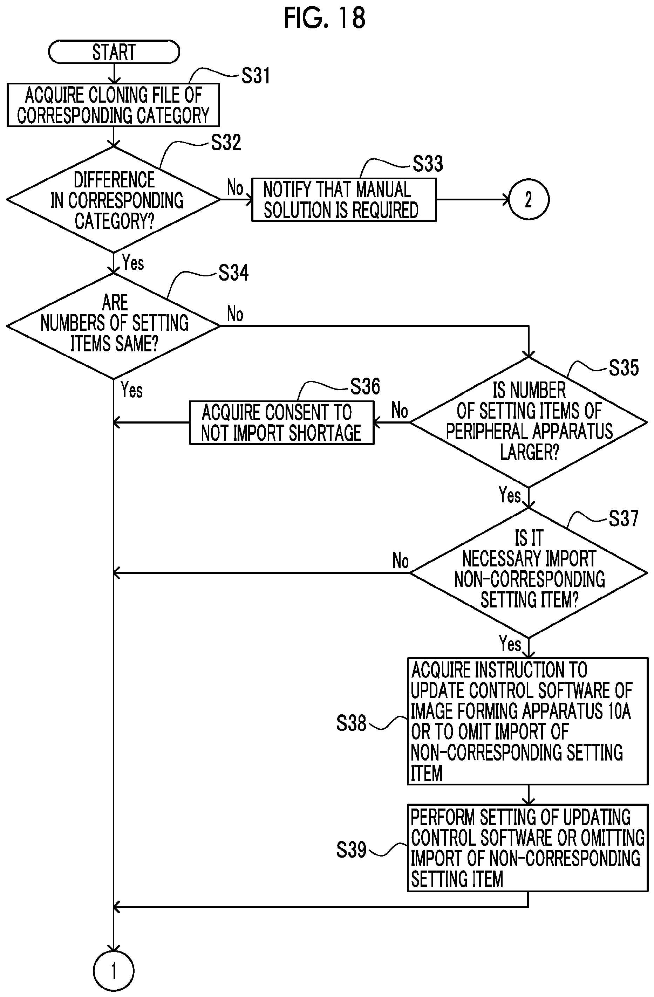

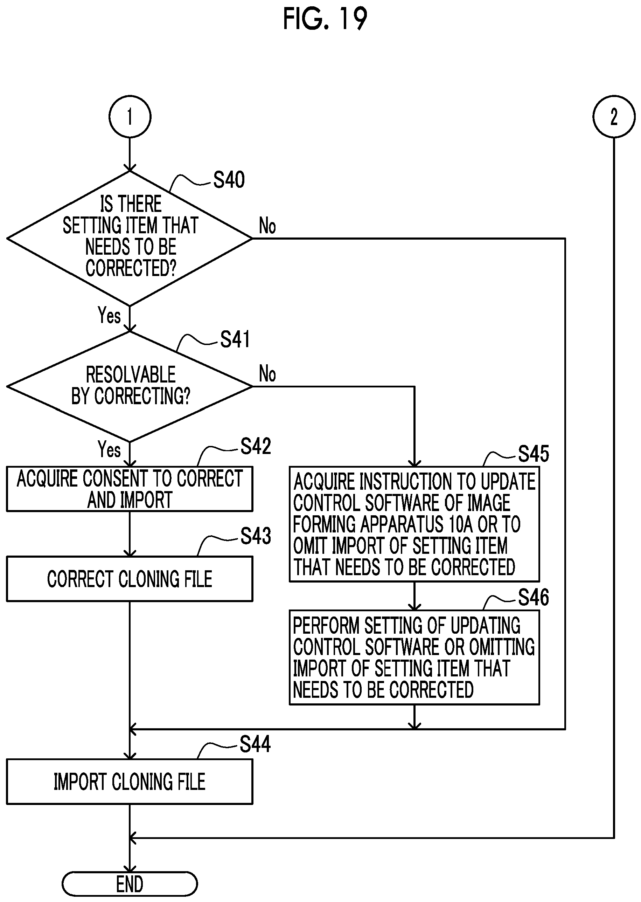

Next, at a time of importing a cloning file in the image forming apparatus 10A, with reference to the flowcharts in Figs. 18 and 19, a process in a case where setting information of the image forming apparatus 10A and setting information of a peripheral apparatus do not completely correspond to each other will be described. The flowcharts in Figs. 18 and 19 illustrate a series of flowcharts divided into a first half and a second half.

In this flowchart, a process from a stage at which the control unit 31 specifies a category related to a fault and acquires a cloning file of the specified category will be described.

First, the control unit 31 of the image forming apparatus 10A acquires a cloning file of a specified category from a peripheral apparatus in step S31.

Next, in step S32, the control unit 31 determines whether or not there is a difference in setting information of the corresponding category between the image forming apparatus 10A and the peripheral apparatus.

In step S32, in a case where it is determined that there is no difference in the setting information, the control unit 31 notifies a user that a manual solution is required in step S33, and ends the process.

In a case where it is determined in step S32 that there is a difference in the setting information, the control unit 31 determines whether or not the number of setting items of the setting information of the image forming apparatus 10A and the number of setting items of the setting information of the peripheral apparatus are the same in step S34.

In step S34, in a case where it is determined that the numbers of setting items are the same, the control unit 31 transitions to step S40.

In a case where it is determined that the numbers of setting items are different from each other in step S34, the control unit 31 determines whether or not the number of setting items of the setting information of the peripheral apparatus is larger than the number of setting items of the setting information of the image forming apparatus 10A in step S35.

In step S35, in a case where it is determined that the number of setting items of the setting information of the peripheral apparatus is smaller, in step S36, the control unit 31 acquires consent of the user to not import a shortage setting item to the setting information of the image forming apparatus 10A, and transitions to step S40.

In step S35, in a case where it is determined that the number of setting items of the setting information of the peripheral apparatus is larger, in step S37, the control unit 31 determines whether or not it is necessary to import the non-corresponding setting item to the setting information of the image forming apparatus 10A.

In step S37, in a case where it is determined that the import of the non-corresponding setting item is not necessary, the control unit 31 transitions to step S40.

In step S37, in a case where it is determined that the non-corresponding setting item needs to be imported, in step S38, the control unit 31 acquires an instruction to update control software of the image forming apparatus 10A to a version corresponding to the non-corresponding setting item or to omit the import of the non-corresponding setting item, from the user.

Next, in step S39, the control unit 31 performs a setting of updating the control software in accordance with the instruction of the user acquired in step S38, or omitting the import of the non-corresponding setting item at a time of import, and transitions to step S40.

Next, in step S40, the control unit 31 determines whether or not there is a setting item that needs to be corrected at the time of import.

In step S40, in a case where it is determined that there is a setting item that needs to be corrected at the time of import, the control unit 31 determines whether or not the fault can be resolved by correcting the setting item that needs to be corrected in step S41.

In step S41, in a case where it is determined that the fault can be resolved by the correction, the control unit 31 acquires consent to correct and import the setting item that needs to be corrected, from the user in step S42.

Next, the control unit 31 corrects the cloning file in step S43, imports the cloning file in step S44, and ends the process. In step S44, in a case where a setting item for which import is omitted is set, the control unit 31 omits the import of the setting item.

Further, in step S40, in a case where it is determined that no setting item needs to be corrected at the time of import, the control unit 31 transitions to step S44, imports the cloning file, and ends the process. In step S44, in a case where a setting item for which import is omitted is set, the control unit 31 omits the import of the setting item.

In a case where it is determined that the fault cannot be resolved by the correction in step S41, the control unit 31 acquires an instruction to update the control software of the image forming apparatus 10A to a version corresponding to the setting item of the peripheral apparatus or to omit the import of the setting items that need to be corrected from the user in step S45.

Next, in step S46, the control unit 31 updates the control software in accordance with the instruction of the user acquired in step S45, or sets a setting to omit the import at the time of importing the setting items that need to be corrected.

Next, in step S44, the control unit 31 imports the cloning file, and ends the process. In step S44, in a case where a setting item for which import is omitted is set, the control unit 31 omits the import of the setting item.

### [Modification Example]

Although the image forming system according to one exemplary embodiment of the present invention is described above, the present invention is not limited to the exemplary embodiment described above and can be modified as appropriate.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Further, in the above-described exemplary embodiment, the case where the exemplary embodiment of the present invention is applied to the image forming apparatus is described. Meanwhile, the exemplary embodiment of the present invention is not limited thereto, and the exemplary embodiment also can be applied to various types of image forming apparatuses such as a mobile phone, a tablet, a personal computer, and the like.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

10A, 10B, 10C, 10D: image forming apparatus
11: CPU
12: RAM
13: storage device
14: communication interface
15: user interface device
16: scanner
17: print engine
18: control bus
20: network
31: control unit
32: operation input unit
33: display unit
34: data transmission and reception unit
35: storage unit
36: authentication unit
37: image scanning unit
38: image output unit

## Claims

1. An image processing apparatus (10A) comprising:
a processor configured to:
acquire, in a case where a fault has occurred in the image processing apparatus (10A), setting information associated with the fault from an external apparatus (10B/10C/10D); and **characterized in that**
extract a setting item of which setting contents are different between setting information of the image processing apparatus (10A) associated with the fault and the acquired setting information associated with the fault, wherein the extracted setting item causes the fault occurrence.

2. The image processing apparatus (10A) according to claim 1, wherein the processor is configured to:
notify a user of the extracted setting item.

3. The image processing apparatus (10A) according to claim 1 or 2, wherein the processor is configured to:
change a setting content of the extracted setting item to a setting content of the acquired setting information.

4. The image processing apparatus (10A) according to claim 1,
wherein the setting information is classified into a plurality of categories, and
the processor is configured to:
acquire only setting information of a category associated with the fault that has occurred.

5. The image processing apparatus (10A) according to any one of claims 1 to 4, wherein the processor is configured to:
notify, in a case where there is no difference between the setting information of the image processing apparatus (10A) and the acquired setting information, a person in charge of maintenance of the case.

6. The image processing apparatus (10A) according to any one of claims 1 to 5,
wherein the external apparatus (10B/10C/10D) from which the setting information is acquired is an apparatus connected to the image processing apparatus (10A) via a network (20).

7. The image processing apparatus (10A) according to claim 6,
wherein the external apparatus (10B/10C/10D) from which the setting information is acquired is an apparatus registered in advance.

8. The image processing apparatus (10A) according to any one of claims 1 to 7, wherein the processor is configured to:
correct and change, in a case where the acquired setting information does not correspond to a version of control software of the image processing apparatus (10A), the acquired setting information.

9. The image processing apparatus (10A) according to any one of claims 1 to 8, wherein the processor is configured to:
update, in a case where the acquired setting information does not correspond to a version of control software of the image processing apparatus (10A), the version of the control software of the image processing apparatus (10A) to a version corresponding to the acquired setting information.

10. The image processing apparatus (10A) according to any one of claims 1 to 9, wherein the processor is configured to:
notify, in a case where the number of setting items of the acquired setting information is smaller than the number of setting items of the setting information of the image processing apparatus (10A), that the number of setting items of the acquired setting information is smaller than the number of setting items of the setting information of the image processing apparatus (10A).

11. The image processing apparatus (10A) according to any one of claims 1 to 10, wherein the processor is configured to:
acquire, in a case where the number of setting items of the acquired setting information is smaller than the number of setting items of the setting information of the image processing apparatus (10A), setting information of a shortage setting item from an external apparatus (10B/10C/10D) other than the external apparatus (10B/10C/10D) from which the setting information is acquired.

12. The image processing apparatus (10A) according to any one of claims 1 to 11, wherein the processor is configured to:
notify, in a case where the number of setting items of the acquired setting information is larger than the number of setting items of the setting information of the image processing apparatus (10A), that the number of setting items of the acquired setting information is larger than the number of setting items of the setting information of the image processing apparatus (10A).

13. The image processing apparatus (10A) according to any one of claims 1 to 12, wherein the processor is configured not to:
use, in a case where the number of setting items of the acquired setting information is larger than the number of setting items of the setting information of the image processing apparatus (10A), the setting information of an excessive setting item.

14. A program comprising instructions which, when the program is executed by a computer, cause the computer to carry out a process comprising:
acquiring, in a case where a fault has occurred in an image processing apparatus (10A), setting information associated with the fault from an external apparatus (10B/10C/10D); and **characterized in that**
extracting a setting item of which setting contents are different between setting information of the image processing apparatus (10A) associated with the fault and the acquired setting information associated with the fault, wherein the extracted setting item causes the fault occurrence.

## Patentansprüche

1. Bildverarbeitungsvorrichtung (10A), umfassend:
einen Prozessor, der so konfiguriert ist, dass er:
in einem Fall, in dem ein Fehler bei der Bildverarbeitungsvorrichtung (10A) aufgetreten ist, von einer externen Vorrichtung (10B/10C/10D) Einstellinformationen, die dem Fehler zugeordnet sind, erfasst; und **dadurch gekennzeichnet, dass** er
ein Einstellelement extrahiert, dessen Einstellinhalte zwischen den dem Fehler zugeordneten Einstellinformationen der Bildverarbeitungsvorrichtung (10A) und den erfassten dem Fehler zugeordneten Einstellinformationen unterschiedlich sind, wobei das extrahierte Einstellelement das Auftreten des Fehlers verursacht.

2. Bildverarbeitungsvorrichtung (10A) nach Anspruch 1, wobei der Prozessor so konfiguriert ist, dass er:
einen Benutzer über das extrahierte Einstellelement benachrichtigt.

3. Bildverarbeitungsvorrichtung (10A) nach Anspruch 1 oder 2, wobei der Prozessor so konfiguriert ist, dass er:
einen Einstellinhalt des extrahierten Einstellelements in einen Einstellinhalt der erfassten Einstellinformationen ändert.

4. Bildverarbeitungsvorrichtung (10A) nach Anspruch 1,
wobei die Einstellinformationen in mehrere Kategorien klassifiziert sind und der Prozessor so konfiguriert ist, dass er:
nur Einstellinformationen einer Kategorie, die dem aufgetretenen Fehler zugeordnet ist, erfasst.

5. Bildverarbeitungsvorrichtung (10A) nach einem der Ansprüche 1 bis 4, wobei der Prozessor so konfiguriert ist, dass er:
in einem Fall, in dem es keinen Unterschied zwischen den Einstellinformationen der Bildverarbeitungsvorrichtung (10A) und den erfassten Einstellinformationen gibt, eine für die Wartung in dem Fall zuständige Person benachrichtigt.

6. Bildverarbeitungsvorrichtung (10A) nach einem der Ansprüche 1 bis 5,
wobei die externe Vorrichtung (10B/10C/10D), von der die Einstellinformationen erfasst werden, eine Vorrichtung ist, die via ein Netzwerk (20) mit der Bildverarbeitungsvorrichtung (10A) verbunden ist.

7. Bildverarbeitungsvorrichtung (10A) nach Anspruch 6,
wobei die externe Vorrichtung (10B/10C/10D), von der die Einstellinformationen erfasst werden, eine Vorrichtung ist, die im Voraus registriert ist.

8. Bildverarbeitungsvorrichtung (10A) nach einem der Ansprüche 1 bis 7, wobei der Prozessor so konfiguriert ist, dass er:
in einem Fall, in dem die erfassten Einstellinformationen nicht einer Version von Steuersoftware der Bildverarbeitungsvorrichtung (10A) entsprechen, die erfassten Einstellinformationen korrigiert und ändert.

9. Bildverarbeitungsvorrichtung (10A) nach einem der Ansprüche 1 bis 8, wobei der Prozessor so konfiguriert ist, dass er:
in einem Fall, in dem die erfassten Einstellinformationen nicht einer Version von Steuersoftware der Bildverarbeitungsvorrichtung (10A) entsprechen, die Version der Steuersoftware der Bildverarbeitungsvorrichtung (10A) auf eine den erfassten Einstellinformationen entsprechende Version aktualisiert.

10. Bildverarbeitungsvorrichtung (10A) nach einem der Ansprüche 1 bis 9, wobei der Prozessor so konfiguriert ist, dass er:
in einem Fall, in dem die Anzahl an Einstellelementen der erfassten Einstellinformationen kleiner als die Anzahl an Einstellelementen der Einstellinformationen der Bildverarbeitungsvorrichtung (10A) ist, darüber benachrichtigt, dass die Anzahl an Einstellelementen der erfassten Einstellinformationen kleiner als die Anzahl an Einstellelementen der Einstellinformationen der Bildverarbeitungsvorrichtung (10A) ist.

11. Bildverarbeitungsvorrichtung (10A) nach einem der Ansprüche 1 bis 10, wobei der Prozessor so konfiguriert ist, dass er:
in einem Fall, in dem die Anzahl an Einstellelementen der erfassten Einstellinformationen kleiner als die Anzahl an Einstellelementen der Einstellinformationen der Bildverarbeitungsvorrichtung (10A) ist, Einstellinformationen eines fehlenden Einstellelements von einer externen Vorrichtung (10B/10C/10D), die von der externen Vorrichtung (10B/10C/10D), von der die Einstellinformationen erfasst werden, verschieden ist, erfasst.

12. Bildverarbeitungsvorrichtung (10A) nach einem der Ansprüche 1 bis 11, wobei der Prozessor so konfiguriert ist, dass er:
in einem Fall, in dem die Anzahl an Einstellelementen der erfassten Einstellinformationen größer als die Anzahl an Einstellelementen der Einstellinformationen der Bildverarbeitungsvorrichtung (10A) ist, darüber benachrichtigt, dass die Anzahl an Einstellelementen der erfassten Einstellinformationen größer als die Anzahl an Einstellelementen der Einstellinformationen der Bildverarbeitungsvorrichtung (10A) ist.

13. Bildverarbeitungsvorrichtung (10A) nach einem der Ansprüche 1 bis 12, wobei der Prozessor so konfiguriert ist, dass er nicht:
in einem Fall, in dem die Anzahl an Einstellelementen der erfassten Einstellinformationen größer als die Anzahl an Einstellelementen der Einstellinformationen der Bildverarbeitungsvorrichtung (10A) ist, die Einstellinformationen eines überzähligen Einstellelements verwendet.

14. Programm, das Anweisungen umfasst, die, wenn das Programm von einem Computer ausgeführt wird, den Computer veranlassen, einen Prozess durchzuführen, der umfasst:
Erfassen von dem Fehler zugeordneten Einstellinformationen von einer externen Vorrichtung (10B/10C/10D) in einem Fall, in dem ein Fehler in einer Bildverarbeitungsvorrichtung (10A) aufgetreten ist; und **dadurch gekennzeichnet, dass**
Extrahieren eines Einstellelements, dessen Einstellinhalte zwischen dem Fehler zugeordneten Einstellinformationen der Bildverarbeitungsvorrichtung (10A) und den erfassten dem Fehler zugeordneten Einstellinformationen unterschiedlich sind, wobei das extrahierte Einstellelement das Auftreten des Fehlers verursacht.

## Revendications

1. Appareil de traitement d'images (10A) comprenant :
un processeur configuré pour :
acquérir, dans un cas où une défaillance s'est produite dans l'appareil de traitement d'images (10A), des informations de réglage associées à la défaillance à partir d'un appareil externe (10B/10C/10D) ; et **caractérisé en ce que**
extraire un élément de réglage dont le contenu de réglage est différent entre des informations de réglage de l'appareil de traitement d'images (10A) associées à la défaillance et les informations de réglage acquises associées à la défaillance, dans lequel l'élément de réglage extrait provoque l'apparition de la défaillance.

2. Appareil de traitement d'images (10A) selon la revendication 1, dans lequel le processeur est configuré pour :
notifier un utilisateur de l'élément de réglage extrait.

3. Appareil de traitement d'images (10A) selon la revendication 1 ou la revendication 2, dans lequel le processeur est configuré pour :
modifier un contenu de réglage de l'élément de réglage extrait en un contenu de réglage des informations de réglage acquises.

4. Appareil de traitement d'images (10A) selon la revendication 1,
dans lequel les informations de réglage sont classées en une pluralité de catégories, et le processeur est configuré pour :
acquérir uniquement des informations de réglage d'une catégorie associée à la défaillance qui s'est produite.

5. Appareil de traitement d'images (10A) selon l'une quelconque des revendications 1 à 4, dans lequel le processeur est configuré pour :
notifier, dans un cas où il n'y a pas de différence entre les informations de réglage de l'appareil de traitement d'images (10A) et les informations de réglage acquises, une personne chargée de la maintenance du cas.

6. Appareil de traitement d'images (10A) selon l'une quelconque des revendications 1 à 5,
dans lequel l'appareil externe (10B/10C/10D) à partir duquel les informations de réglage sont acquises est un appareil connecté à l'appareil de traitement d'images (10A) via un réseau (20).

7. Appareil de traitement d'images (10A) selon la revendication 6,
dans lequel l'appareil externe (10B/10C/10D) à partir duquel les informations de réglage sont acquises est un appareil enregistré à l'avance.

8. Appareil de traitement d'images (10A) selon l'une quelconque des revendications 1 à 7, dans lequel le processeur est configuré pour :
corriger et modifier, dans un cas où les informations de réglage acquises ne correspondent pas à une version de logiciel de contrôle de l'appareil de traitement d'images (10A), les informations de réglage acquises.

9. Appareil de traitement d'images (10A) selon l'une quelconque des revendications 1 à 8, dans lequel le processeur est configuré pour :
mettre à jour, dans un cas où les informations de réglage acquises ne correspondent pas à une version de logiciel de contrôle de l'appareil de traitement d'images (10A), la version du logiciel de contrôle de l'appareil de traitement d'images (10A) à une version correspondant aux informations de réglage acquises.

10. Appareil de traitement d'images (10A) selon l'une quelconque des revendications 1 à 9, dans lequel le processeur est configuré pour :
notifier, dans un cas où le nombre d'éléments de réglage des informations de réglage acquises est inférieur au nombre d'éléments de réglage des informations de réglage de l'appareil de traitement d'images (10A), que le nombre d'éléments de réglage des informations de réglage acquises est inférieur au nombre d'éléments de réglage des informations de réglage de l'appareil de traitement d'images (10A).

11. Appareil de traitement d'images (10A) selon l'une quelconque des revendications 1 à 10, dans lequel le processeur est configuré pour :
acquérir, dans un cas où le nombre d'éléments de réglage des informations de réglage acquises est inférieur au nombre d'éléments de réglage des informations de réglage de l'appareil de traitement d'images (10A), des informations de réglage d'un élément de réglage manquant à partir d'un appareil externe (10B/10C/10D) autre que l'appareil externe (10B/10C/10D) à partir duquel les informations de réglage sont acquises.

12. Appareil de traitement d'images (10A) selon l'une quelconque des revendications 1 à 11, dans lequel le processeur est configuré pour :
notifier, dans un cas où le nombre d'éléments de réglage des informations de réglage acquises est supérieur au nombre d'éléments de réglage des informations de réglage de l'appareil de traitement d'images (10A), que le nombre d'éléments de réglage des informations de réglage acquises est supérieur au nombre d'éléments de réglage des informations de réglage de l'appareil de traitement d'images (10A).

13. Appareil de traitement d'images (10A) selon l'une quelconque des revendications 1 à 12, dans lequel le processeur est configuré pour ne pas :
utiliser, dans un cas où le nombre d'éléments de réglage des informations de réglage acquises est supérieur au nombre d'éléments de réglage des informations de réglage de l'appareil de traitement d'images (10A), les informations de réglage d'un élément de réglage excédentaire.

14. Programme comprenant des instructions qui, lorsque le programme est exécuté par un ordinateur, amènent l'ordinateur à effectuer un processus comprenant :
acquérir, dans un cas où une défaillance s'est produite dans un appareil de traitement d'images (10A), des informations de réglage associées à la défaillance à partir d'un appareil externe (10B/10C/10D) ; et **caractérisé en ce que**
extraire un élément de réglage dont le contenu de réglage est différent entre des informations de réglage de l'appareil de traitement d'images (10A) associées à la défaillance et les informations de réglage acquises associées à la défaillance, dans lequel l'élément de réglage extrait provoque l'apparition de la défaillance.
